# EUROPÄISCHE PATENTSCHRIFT

(11) **EP 0 571 356 B1**
(45) Veröffentlichungstag und Bekanntmachung des Hinweises auf die Patenterteilung: **23.12.1998**
(21) Anmeldenummer: 93890086.7
(22) Anmeldetag: 28.04.1993
(51) Int. Cl.: H02M 3/155

(54) **Wechselspannungs- zu Gleichspannungswandler**
AC to DC converter
Convertisseur de courant alternatif en courant continu

(30) Priorität: 29.04.1992 AT 885/92
(43) Veröffentlichungstag der Anmeldung: 24.11.1993
(73) Patentinhaber: Leopold, Hans, O. Univ.-Prof. Dr., A-8043 Graz (AT)
(72) Erfinder: Leopold, Hans, O. Univ.-Prof. Dr., A-8043 Graz (AT)
(74) Vertreter: Gibler, Ferdinand

(56) Entgegenhaltungen:
- EP-A- 0 431 778
- EP-A- 0 507 393
- DE-A- 4 224 796

## Beschreibung

Die Erfindung bezieht sich auf einen Wechselspannungs- zu Gleichspannungswandler mit einer an eine Wechselspannungsquelle angeschlossene Gleichrichterschaltung die mit den Eingängen eines Hochsetzstellers in Verbindung steht, und bei der ein mit den Ausgängen des Hochsetzstellers in Verbindung stehender Ladekondensator und ein Widerstand vorgesehen sind.

Bei solchen Wandlern ist der Ladekondensator mit den Ausgängen des Hochsetzstellers direkt verbunden, wobei der Widerstand entweder zwischen einem Ausgang der Gleichrichterschaltung und einem Eingang des Hochsetzstellers eingeschaltet ist, oder aber der Widerstand ist einem Eingang der Gleichrichterschaltung vorgeschaltet.

Bei solchen Wandlern erlaubt der aus einer Drossel, einem elektronischen Schalter und einer Diode oder einem weiteren Schalter bestehende Hochsetzsteller eine aktive Beeinflussung des Zeitverlaufs des Eingangsstromes der Gleichrichterschaltung, die vorzugsweise durch eine Gleichrichterbrücke gebildet ist. Dabei kann durch Variation des Tastverhältnisses des Hochsetzstellers der Schalter so gesteuert werden, daß der Eingangsstrom der Gleichrichterschaltung im Mittel proportional der Eingangsspannung ist, wodurch sich ein im wesentlichen sinusförmiger Verlauf des Stromes ergibt. Dabei ist der Widerstand notwendig, da der Hochsetzsteller nur arbeiten kann, wenn die Ausgangsspannung am Ladekondensator größer als die Eingangsspannung des Gleichrichters ist.

Bei diesen bekannten Lösungen fließt der Eingangsstrom in jeder Stellung des Schalters des Hochsetzstellers durch den Widerstand. Dies führt zu entsprechend hohen Verlusten.

Aus der **EP-A2-507 393**, deren ursprünglich eingereichte Fassung gemäß Art. 54 (3),(4) EPÜ als Stand der Technik für das vorliegende Patent gilt, ist ein Schaltkreis mit einem Hochsetzsteller, der an die Ausgänge einer Gleichrichterschaltung angeschlossen ist, bekannt. Der Hochsetzsteller ist aus einer Drossel, einer dazu seriell geschalteten Diode, einem Schalter und einem Kondensator gebildet. Der erste Anschluß des Schalters ist an die Verbindung zwischen Drossel und Diode angeschlossen, sein zweiter Anschluß liegt an Masse. Der erste Anschluß des Kondensators ist direkt mit der Kathode der Diode und der zweite Anschluß des Kondensators über eine Einrichtung zur Detektion des Laststromes mit der Masse verbunden. Besagte Einrichtung zur Laststromdetektion umfaßt stets zumindest ein Mittel zur Gleichrichtung, beispielsweise zwei in Serie geschaltete Dioden. Optional kann ein zu diesem Mittel zur Gleichrichtung parallel geschalteter ohmscher Widerstand vorgesehen sein.

Ziel der Erfindung ist es, einen Wechselspannungs- zu Gleichspannungswandler der eingangs erwähnten Art vorzuschlagen, bei dem diese Nachteile vermieden sind und bei dem sich nur eine sehr geringe Verlustleistung ergibt.

Erfindungsgemäß wird dies dadurch erreicht, daß eine Elektrode des Ladekondensators über den Widerstand mit einem Ausgang des Hochsetzstellers verbunden ist.

Durch diese Maßnahmen wird erreicht, daß der Widerstand nur während jener Zeit vom Eingangsstrom der Gleichrichterschaltung durchflossen wird, in der der Schalter des Hochsetzstellers geöffnet ist. Bei einem Tastverhältnis der Ansteuerung des Schalters des Hochsetzstellers von 0,5 sinkt die Verlustleistung am Widerstand auf die Hälfte ab, verglichen mit der bei den bekannten Lösungen auftretenden Verlustleistung.

Weiters kann vorgesehen sein, daß die beiden Ausgänge des Hochsetzstellers mit einem weiteren Kondensator verbunden sind.

Durch diese Maßnahmen ergibt sich eine weitere Reduktion der Verlustleistung, da die hochfrequente Welligkeit des Ausgangsstromes des Hochsetzstellers durch den weiteren Kondensator vor dem Widerstand geglättet wird. Der Widerstand daher nur durch den niederfrequenten transformierten Eingangsstrom belastet wird, dessen Effektivwert kleiner als der des ungeglätteten Ausgangsstromes des Hochsetzstellers ist. Dabei kann die Kapazität des zusätzlichen Kondensators aufgrund der hohen Schaltfrequenz des Hochsetzstellers um Größenordnungen kleiner als jene des Ladekondensators sein.

Aufgrund der gegenüber den bekannten Lösungen wesentlich verminderten Leistungsverlustes ist es auch möglich den Widerstand so klein zu dimensionieren, daß die Gleichspannungsquelle auch einer transienten überspannung, wie sie in der Vorschrift VDE 0160 definiert ist, standhält. Dabei wird weder die zulässige Betriebsspannung des Ladekondensators unnötig hoch, noch die Verlustleistung des Widerstandes störend groß.

Die Erfindung wird nun anhand der Zeichnung näher erläutert. Dabei zeigen:
Fig. 1 einen Wechselspannungs- zu Gleichspannungswandler nach dem Stand der Technik,
Fig. 2 und 3 Wechselspannungs- zu Gleichspannungswandler nach der Erfindung.

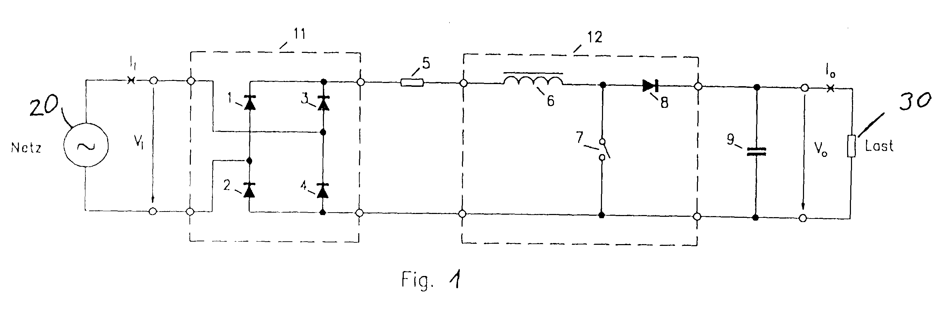

Der Wandler nach der Fig. 1 weist eine Wechselspannungsquelle 20 auf, die eine Eingangsspannung V₁ liefert und einen Eingangsstrom I₁ über einen mit dieser verbundenen Gleichrichterschaltung 11 treibt. Die Gleichrichterschaltung 11 ist durch in einer Brückenschaltung angeordnete Dioden 1 bis 4 gebildet. Diese Gleichrichterschaltung 11 ist über einen Widerstand 5 mit einem Hochsetzsteller 12 verbunden. Dieser besteht aus einer Drossel 6, einen diese mit dem zweiten Ausgang der Gleichrichterschaltung 11 verbindenden Schalter 7, der mit einer hochfrequenten Steuerspannung beaufschlagt ist, und einer Diode 8, die mit einem Ausgang des Hochsetzsteller 12 verbunden ist.

Die beiden Ausgänge des Hochsetzstellers 12 sind mit einem Ladekondensator 9 verbunden, über dem eine Ausgangsspannung Vₐ abgreifbar ist, die einen Laststrom Iₐ über eine Last 30 treibt.

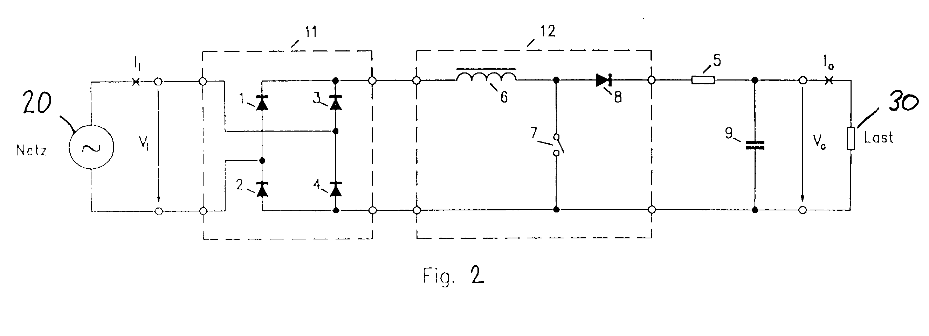

Der erfindungsgemäße Wechselspannungs- zu Gleichspannungswandler nach der Fig. 2 unterscheidet sich von der bekannten Lösung nach der Fig. 1 dadurch, daß der Widerstand 5 mit dem Ausgang des Hochsetzstellers 12 verbunden ist

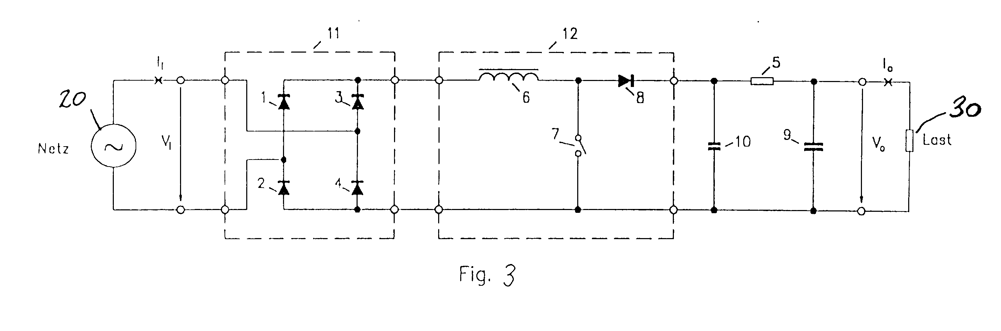

Bei der Ausführungsform eines erfindungsgemäßen Wechselspannungs- zu Gleichspannungswandlers nach der Fig. 3 ist neben dem Ladekondensator 9 noch ein weiterer Kondensator 10 vorgesehen, der mit beiden Ausgängen des Hochsetzstellers verbunden ist.

Bei allen dargestellten Wandlern kann der Schalter 7 z.B. mit 100kHz getaktet werden.

Bei einem Tastverhältnis von z.B. 0,5 des Schalters 7 ergibt sich bei dem Wandler nach der Fig. 2 gegenüber jener nach der Fig. 1 eine Verminderung der am Widerstand 5 anfallenden Verlustleistung auf die Hälfte. Diese Einsparung wird besonders deutlich, wenn die Schaltung nach der Fig. 2 in einem Weitbereichsnetzgerät verwendet wird, das aus Eingangsspannungen zwischen 90 und 264V_{eff} eine konstante Gleichspannung von ca. 400V erzeugt. Der hohe Eingangsstrom I₁ bei niedrigen Werten der Netzspannung V₁ fliept nur kurzzeitig durch den Widerstand 5, da der Mittelwert des Stromes durch den Widerstand 5 für alle Netzspannungen gleich und auf einen niedrigen Wert bleibt.

Bei der Ausführungsform nach der Fig. 3 wird eine weitere Reduktion der Verlustleistung am Widerstand 5 erreicht, da die hochfrequente Welligkeit des Ausgangsstromes Iₐ des Hochsetzstellers durch den schaltfesten Kondensator 10 vor dem Widerstand 5 geglättet wird. Der Widerstand 5 wird daher nur von dem niederfrequenten, transformierten Eingangsstrom belastet, dessen Effektivwert kleiner ist als der des ungeglätteten Ausgangsstromes des Hochsetzstellers 12.

Die Verlustleistung am Widerstand 5 ist bei dem Wandler nach der Fig. 3 um ca. den Faktor 16 kleiner als bei dem Wandler nach der Fig. 1.

## Patentansprüche (Patentansprüche für folgende(n) Vertragsstaat(en): CH, LI, DK, LU, NL, SE)

1. Wechselspannungs- zu Gleichspannungswandler mit einem an eine Wechselspannungsquelle angeschlossene Gleichrichterschaltung, die mit den Eingängen eines Hochsetzstellers in Verbindung steht, und bei der ein mit den Ausgängen des Hochsetzstellers in Verbindung stehender Ladekondensator und ein Widerstand vorgesehen sind, **dadurch gekennzeichnet,** daß eine Elektrode des Ladekondensators (9) über den Widerstand (5) mit einem Ausgang des Hochsetzstellers (12) verbunden ist.

2. Wandler nach Anspruch 1, **dadurch gekennzeichnet**, daß die beiden Ausgänge des Hochsetzstellers (12) mit einem weiteren Kondensator (10) verbunden sind.

## Patentansprüche (Patentansprüche für folgende(n) Vertragsstaat(en): AT, BE, DE, FR, GB, IT)

1. Wechselspannungs- zu Gleichspannungswandler mit einem an eine Wechselspannungsquelle angeschlossene Gleichrichterschaltung, die mit den Eingängen eines Hochsetzstellers in Verbindung steht, und bei der ein mit den Ausgängen des Hochsetzstellers in Verbindung stehender Ladekondensator (9) vorgesehen ist, dessen eine Elektrode ausschließlich über einen (ohmschen) Widerstand (5) mit einem Ausgang des Hochsetzstellers (12) verbunden ist.

2. Wandler nach Anspruch 1, **dadurch gekennzeichnet**, daß die beiden Ausgänge des Hochsetzstellers (12) mit einem weiteren Kondensator (10) verbunden sind.

## Claims (Claims for the following Contracting State(s): CH, LI, DK, LU, NL, SE)

1. AC voltage to DC voltage converter having a rectifier circuit which is connected to an AC voltage source which is connected to the inputs of a step-up converter, and in which there is provided a charging capacitor connected to the outputs of the step-up converter, and a resistor, characterized in that one electrode of the charging capacitor (9) is connected via the resistor (5) to an output of the step-up converter (12).

2. Converter according to Claim 1, characterized in that the two outputs of the step-up converter (12) are connected to a further capacitor (10).

## Claims (Claims for the following Contracting State(s): AT, BE, DE, FR, GB, IT)

1. AC voltage to DC voltage converter having a rectifier circuit which is connected to an AC voltage source which is connected to the inputs of a step-up converter, and in which there is provided a charging capacitor (9) which is connected to the outputs of the step-up converter and one electrode of which is connected to an output of the step-up converter (12) exclusively via an (ohmic) resistor (5).

2. Converter according to Claim 1, characterized in that the two outputs of the step-up converter (12) are connected to a further capacitor (10).

## Revendications (Revendications pour l'(les) Etat(s) contractant(s) suivant(s): CH, LI, DK, LU, NL, SE)

1. Convertisseur de tension alternative en tension continue, comportant un circuit redresseur, raccordé à une source de tension alternative et relié aux entrées d'un circuit de fourniture de crête, et pour lequel sont prévues un condensateur de charge, relié aux sorties du circuit de fourniture de crête, et une résistance, caractérisé par le fait qu'une électrode du condensateur de charge (9) est reliée par la résistance (5) à une sortie du circuit de fourniture de crête (12).

2. Convertisseur selon la revendication 1, caractérisé par le fait que les deux sorties du circuit de fourniture de crête (12) sont reliées à un autre condensateur (10).

## Revendications (Revendications pour l'(les) Etat(s) contractant(s) suivant(s): AT, BE, DE, FR, GB, IT)

1. Convertisseur de tension alternative en tension continue, comportant un circuit redresseur, raccordé à une source de tension alternative et relié aux entrées d'un circuit de fourniture de crête, et pour lequel est prévu un condensateur de charge (9), relié aux sorties du circuit de fourniture de crête, dont une électrode est reliée, exclusivement par une résistance (ohmique) (5), à une sortie du circuit de fourniture de crête (12).

2. Convertisseur selon la revendication 1, caractérisé par le fait que les deux sorties du circuit de fourniture de crête (12) sont reliées à un autre condensateur (10).
